# EUROPEAN PATENT SPECIFICATION

(11) **EP 2 814 900 B1**
(45) Date of publication and mention of the grant of the patent: **22.05.2019**
(21) Application number: 13705068.8
(22) Date of filing: 05.02.2013
(51) Int. Cl.: C09K 8/03, C09K 8/32

(54) **USE OF NEUTRAL-DENSITY PARTICLES TO ENHANCE BARITE SAG RESISTANCE AND FLUID SUSPENSION TRANSPORT**
VERWENDUNG VON PARTIKELN MIT NEUTRALER DICHTE ZUR VERBESSERUNG DES BARYTSINKWIDERSTANDS UND FLÜSSIGSUSPENSIONSTRANSPORT
UTILISATION DE PARTICULES À DENSITÉ NEUTRE POUR RENFORCER LA RÉSISTANCE À L'AFFAISSEMENT DE BARYTE ET AMÉLIORER LE TRANSPORT D'UNE SUSPENSION FLUIDE

(30) Priority: 17.02.2012 US 201213399133
(43) Date of publication of application: 24.12.2014
(73) Proprietor: Halliburton Energy Services, Inc., Houston, TX 77072 (US)
(72) Inventor: JAMISON, Dale E., Houston, TX 77032 (US); ALMOND, Stephen W., North Charleston, SC 29406 (US)
(74) Representative: Turner, Craig Robert
(86) International application number: PCT/US2013/024723
(87) International publication number: WO 2013/122775

(56) References cited:
- US-A- 4 436 636
- US-A1- 2005 239 662
- US-A1- 2010 300 759
- US-B1- 6 715 568

## Description

### BACKGROUND

The present invention relates to neutral-density particles that are useful for enhancing hindered settling in subterranean applications. More specifically, the present invention relates to neutral-density particles and their use in subterranean treatment fluids to enhance sag resistance of high-density particles and fluid transport.

As used herein, the term "particles" is not intended to be limiting and does not imply any particular shape. As used herein, the term "high-density particles" refers to particles in suspension that have relatively high densities compared to its continuous phase (e.g., base fluid) and have a tendency to undergo undesirable sagging. In some cases, a suspension may have multiple distributions of particle densities.

As used herein, the term "neutral-density particles" may be a context dependent term that describes particles in suspension whose densities may range anywhere from about the density of the high-density particles to the density of the continuous phase or slightly less. For the purposes of this disclosure, a neutral-density particle will differ from a high-density particle in at least one of: shape, size, and/or density.

Sedimentation is the tendency for particles in suspension to settle out and come to rest. Numerous forces can act on a particle to promote settling (or "sagging"). These include, but are not limited to, gravity, centrifugal acceleration, electromagnetism, and the like. As used herein, "settling" or "sagging" is the falling of suspended particles through liquid. For the purposes of this disclosure, "settling" and "sagging" are used interchangeably. Sedimentation is the termination of the settling or sagging process. The "settling velocity" at which suspended particles settle may also depend on other factors including, but not limited to, their weight, diameter, and shape. As used herein, the term "sag resistance" is a measure of the resistance to flow with no shear on the material. Sag resistance may also generally refer to a suspension's ability to resist sagging of its particles.

There are many real-world fluids for which sagging can be a significant problem. For example, sagging may be particularly undesirable in drilling fluids or "drilling muds" as it can adversely affect the density of the fluid. When settling is prolonged in a drilling fluid that is in use, the upper part of a wellbore can lose mud density, which lessens the hydrostatic pressure in the hole. The density of a drilling fluid is determined by the particular mixture of its components, which typically include a base fluid (e.g., water, brines, oil, etc.), and additives (e.g., emulsifiers, viscosifiers, etc.,).

During a typical drilling operation, the density of the drilling fluid should match or be slightly higher than the formation pressure. For example, when formation pressure increases, drilling fluid density should also increase. This is often achieved by adding high-density particles ("weighting agents") to the drilling fluid since the column of drilling fluid in the wellbore exerts a hydrostatic pressure ("head pressure") proportional to the depth of the hole and the density of the drilling fluid. However, high-density particles such as weighting agents have a greater tendency to sag in lower density fluids (e.g., base fluid) to reduce the effective density difference.

The undesirable sagging of weighting agents can cause density fluctuations in drilling fluids that can de-stabilize a wellbore. In the worst case scenario, an unbalanced formation pressure can cause spikes in the pressure that can ultimately lead to a blowout. Less catastrophic potential outcomes include downhole mud losses and stuck pipes. Some of these may still lead to hole abandonment.

Examples of available weighting agents include, but are not limited to, calcium carbonate, siderite, hematite, barite, and the like. In particular, barite is a common weighting agent used in drilling fluids. As used herein, "barite" generally refers to particles made from barium sulfate. Drilling grade barite is typically ground to a particle size of about 5 microns to about 75 microns, according to American Petroleum Institute standards (API), and has a specific gravity of about 4.20 g/cm³ depending on its purity.

As used herein, "specific gravity" refers to the ratio of density of a particular substance to the density of a reference substance (typically water for fluids). Specific gravity is calculated based on densities at constant pressure and temperature. Grinding procedures will often produce particles having a distribution of sizes. The distribution of the particle sizes are often described as a particle size distribution that defines the relative amounts of a particles present, sorted according to size.

The settling of barite is usually referred to as "barite sag". For drilling fluids containing barite, a significant fluctuation in density may be greater than about 0.5 Ibm/gal (60 kg/m³) along a mud column, which is the result of settling of the barite in the drilling fluid. Sag may occur in both static and dynamic (e.g., while the drilling fluid is being circulated) situations. In dynamic situations such as fluid transport applications, the presence of high-density particles (e.g., barite) in fluids may resist the flow of a given fluid. Thus, sag may also cause problems whenever fluid suspensions need to be transported along a flow field.

There are several known approaches to managing barite sag in subterranean applications. Common sag management approaches include rheological modifications and particle size distribution management and formulation. While it is generally known that smaller barite particles have less sag, they are also more costly to grind. Suspensions in non-vertical columns are also known to settle faster than suspensions in vertical columns. This, however, may require wellbores to have significant deviations in its geometries, which is often not practical or cost effective. Another approach includes increasing the viscosity of the fluid by the use of viscosifiers, gelling agents, and the like to rheologically enhance the suspension of weighting agents. These methods are somewhat limited in that they may not work with pre-existing columns. An excessive increase in viscosity can also have adverse effects on the equivalent circulating density of a fluid, which can lead to additional problems discussed earlier.

Moreover, the behavior of settling particles may be categorized into a "free settling" regime and a "hindered settling" regime. While the free settling regime describes settling of particles (e.g., high-density particle) that do not interact with each other (i.e., a particle in an infinite fluid), in the real world, particles tend to behave in the hindered settling regime where they are affected by interactions with other particles, container walls, etc. Moreover, high-density
particles may be physically obstructed from settling by a high number of very small particles. The presence of very small particles hinders the settling of the larger particles which, in turn, leads to the very small particles being dragged down more quickly than under the free settling regime. Thus, enhancing certain hindered settling mechanisms should also reduce the settling rate for a given particle.

US2005239662 relates to drilling fluid compositions, and methods of producing and using such compositions, wherein the drilling fluid compositions include a nonaqueous base fluid (an oil-based invert emulsion), a blend of one or more copolymers, and polyethylene. The blend of copolymers has an average molecular weight of about 20,000 or greater, and can be prepared by reacting at least one alpha-olefin, and at least one anhydride of an alpha, beta-ethylenically unsaturated carboxylic acid.

US 4436636 relates to an invert emulsion well servicing fluid containing an oleaginous phase, an aqueous phase, an invert emulsifier and an effective amount of a solid, particulate polyolefin having a density of about 0.90 gms/cc or greater.

US 6715568 relates to the use of polymer latices, which are water insoluble, for fluid loss control in water-based drilling fluids. The latices are selected from known latices such that they are absorbed within a filter cake building up at the interface between the wellbore and porous formations in essentially the same state as they are in the aqueous drilling fluid during circulation.

### SUMMARY OF THE INVENTION

The present invention relates to neutral-density particles that are useful for enhancing hindered settling in subterranean applications. More specifically, the present invention relates to neutral-density particles and their use in subterranean treatment fluids to enhance sag resistance of high-density particles and fluid transport.

Accordingly, the present invention provides a method comprising: providing a subterranean treatment fluid comprising: a base fluid and a weighting agent having a first average settling velocity; and a neutral-density particle selected from the group consisting of: polyamides, polystyrenes, polyacrylonitriles, polyvinyl acetates, styrene-butadienes, polymethylpentenes, butyl rubbers, polycarbonates, buckyballs, nanoclays, exfoliated graphites, and any combination thereof; and mixing the subterranean treatment fluid with the neutral-density particle thereby reducing the first average settling velocity of the weighting agent to a second average settling velocity, wherein the neutral-density particle is honeycombed, or fibrous.

Preferably, the method comprises : providing at least one additive selected from the group consisting of: an acid, a biocide, a breaker, a clay stabilizer, a corrosion inhibitor, a crosslinker, a friction reducer, a gelling agent, an iron control agent, a scale inhibitor, a surfactant, a proppant, and any combination thereof.
The present invention further provides a treatment fluid comprising: a base fluid; a weighting agent; and a neutral-density particle, the neutral-density particle is selected from the group consisting of: polyamides, polystyrenes, polyacrylonitriles, polyvinyl acetates, styrene-butadienes, polymethylpentenes, butyl rubbers, polycarbonates, buckyballs, nanoclays, exfoliated graphites, and any combination thereof, wherein the neutral-density particle is honeycombed or fibrous.

The features and advantages of the present invention will be readily apparent to those skilled in the art upon a reading of the description of the preferred embodiments that follows.

### DETAILED DESCRIPTION

The present invention relates to neutral-density particles that are useful for enhancing hindered settling in subterranean applications. More specifically, the present invention relates to neutral-density particles and their use in subterranean treatment fluids to enhance sag resistance of high-density particles and fluid transport.

The methods and compositions of the present invention are useful in a variety of applications in which it is desirable to enhance sag resistance of particles in suspension in any context. The methods and compositions of the present invention should also have applicability in various mining and drilling operations. In some embodiments, the methods and compositions of the present invention should be useful in pipeline operations to enhance the suspension of particulates in the pipeline fluid. In yet other embodiments, the methods and compositions of the present invention may be useful in maintaining the suspension of particulates in the formation of composites containing such particulates.

As used herein, a "suspension" is a heterogeneous fluid that has solid particles (i.e., dispersed phase) that are sufficiently large for sedimentation. Suspensions also include a medium (i.e., continuous phase) that is typically less dense than the dispersed phase. The continuous phase may be solid, liquid, or gas.

Examples of suitable suspensions include, but are not limited to, drilling fluids, completion fluids, and cement compositions, as well as potentially other fluids that are used in subterranean operations (e.g., such as fracturing fluids, sand control fluids, lost circulation pills, etc.). Other examples include, but are not limited to, applications in cosmetics (e.g., exfoliator, sunscreen, etc.), foodstuffs (e.g., salad dressing, soup, etc.), paints and pigments, in which it is desirable to maintain particulates in suspension.

Although many of the embodiments of the present invention will be discussed in the context of subterranean operations, such discussion is only intended to illustrate some applications of enhancing sag resistance using the methods of the present invention and should not be considered limiting. There are a number of advantages to the present invention.

The present invention provides compositions and methods for enhancing the sag resistance of particles suspended in fluids without use of chemical additives or manipulating the geometry of the wellbore. The present invention is able to enhance hindered settling of a particle by providing neutral-density particles that have a certain density, shape (including size), and particle count number according to the embodiments of the present invention. It is believed that the density, shape, and particle count of neutral-density particles may contribute to reduce the settling rate of a given particle. In some cases, the synergistic effects of these factors working together can provide unexpected or surprisingly good reduction in the tendency of particles to sag in the fluids.

The enhancement of hindered settling, which increases sag resistance, may be achieved through a number of means. For example, the neutral-density particles can interact with the high-density particles (via attractive forces such as electrostatic, Van der Waals, etc.) to reduce the settling rate of high-density particles. It is believed that this interaction is the result of a "particle-fluid network" structure that is formed within the treatment fluid when sufficient amounts of neutral-density particles are added. In some embodiments, it is believed that particles in suspension will tend to behave in the hindered settling regime when the particle concentration is greater than about 0.1% by volume. This may be dependent on the characteristics of the particles and the fluid, as well as other factors.

It is also believed that in this network, high-density particles present in the treatment fluid are physically hindered, obstructed, prevented, or blocked from settling. In at least some embodiments, this physical hindering requires that the high-density particles come in contact with other particles (e.g., neutral-density particles). Thus, it is generally desirable that the neutral- density particles are present in at least a sufficient amount to create the physically hindering effect, which may be related to the presence of the particles at a sufficient concentration, particle count, and/or the shapes or geometries that take up significant volume.

In some cases, the particles of the present invention may dynamically take up volumes of space that are much greater than their actual static volumes. For example, it is believed that neutral-density particles having certain shapes will be free to rotate, tumble, or walk (e.g., by stochastic processes such as Brownian motion). These motions allow the particles to obstruct a certain amount of space that is greater than their actual volume. It is also believed that certain high-aspect ratio shapes may provide a greater degree of hindered settling. For example, fibers or rods may be particularly advantageous because of their tendency to self-align, e.g., in films, which also increases the potential associative interactions between the particles. Thus, the shape of the neutral-density particles may affect the settling rate of high-density particles.

The neutral-density particles may also comprise, but are not limited to, polyethylene (e.g., LDPE, LLDPE, HDPE), polypropylene, polybutylene, ethylene-propylene, polycarbonate, buckyballs, carbon nanotubes (single walled or multi-walled), nanoclays, exfoliated graphite, as well as other materials that have a density that matches or closely resembles the density of the continuous phase of the suspension. Generally, materials that have relatively large surface areas are particularly desirable because they tend to have higher drag coefficients.

In some embodiments, the present invention provides a suspension comprising: neutral-density particles and a weighting agent suspended in a base fluid. In some embodiments, the suspension comprises a suspension selected from the group consisting of: a drilling fluid, a fracturing fluid, a completion fluid, a sand control fluid, a cement fluid, a loss circulation fluid and any combination thereof.

In other embodiments, the suspension comprises a suspension fluid selected from the group consisting of: a cosmetic product, a paint product, a food product, and any combination thereof. Suitable examples of suspensions include, but are not limited to, exfoliators, creams, sunscreens, salad dressings, soups, and the like.

In an example of a subterranean treatment fluid of the present invention, a drilling fluid is described. In one embodiment, the present invention provides a drilling fluid comprising neutral-density particles and a weighting agent suspended in a base fluid. Optionally, the drilling fluid may also comprise additives such as, but not limited to, emulsifiers, fluid-loss control agents, wetting agents, viscosifiers, and alkali.

In general, the base fluid may be any fluid that may be used as a continuous phase. Suitable base fluids may include, but not be limited to, oil- based fluids, aqueous-based fluids, aqueous-miscible fluids, water-in-oil emulsions, or oil-in-water emulsions. Suitable oil-based fluids may include alkanes, olefins, aromatic organic compounds, cyclic alkanes, paraffins, diesel fluids, mineral oils, desulfurized hydrogenated kerosenes, and any combination thereof. Suitable aqueous-based fluids may include fresh water, saltwater (e.g., water containing one or more salts dissolved therein), brine (e.g., saturated salt water), seawater, and any combination thereof. Suitable aqueous-miscible fluids may include, but not be limited to, alcohols, e.g., methanol, ethanol, n-propanol, isopropanol, n-butanol, sec-butanol, isobutanol, and t-butanol; glycerins; glycols, e.g., polyglycols, propylene glycol, and ethylene glycol; polyglycol amines; polyols; any derivative thereof; any in combination with salts, e.g., sodium chloride, calcium chloride, calcium bromide, zinc bromide, potassium carbonate, sodium formate, potassium formate, cesium formate, sodium acetate, potassium acetate, calcium acetate, ammonium acetate, ammonium chloride, ammonium bromide, sodium nitrate, potassium nitrate, ammonium nitrate, ammonium sulfate, calcium nitrate, sodium carbonate, and potassium carbonate; any in combination with an aqueous-based fluid, and any combination thereof. Suitable water-in-oil emulsions, also known as invert emulsions, may have an oil-to-water ratio from a lower limit of greater than about 50:50, 55:45, 60:40, 65:35, 70:30, 75:25, or 80:20 to an upper limit of less than about 100:0, 95:5, 90:10, 85:15, 80:20, 75:25, 70:30, or 65:35 by volume in the base treatment fluid, where the amount may range from any lower limit to any upper limit and encompass any subset there between. Examples of suitable invert emulsions include those disclosed in U .S. Patent Number 5,905,061, U .S. Patent Number 5,977,031, and U .S. Patent Number 6,828,279. It should be noted that for water-in-oil and oil-in-water emulsions, any mixture of the above may be used including the water being and/or comprising an aqueous-miscible fluid.

It should be noted that when "about" is provided at the beginning of a numerical list, "about" modifies each number of the numerical list.
It should be noted that in some numerical listings of ranges, some lower limits listed may be greater than some upper limits listed. One skilled in the art will recognize that the selected subset will require the selection of an upper limit in excess of the selected lower limit.

In some embodiments, the specific gravity of the neutral-density particles will range from about the density of the weighting agent and about the density of the base fluid. In some embodiments, the density of the neutral- density particle may be slightly less than the density of the base fluid. The exact density used may depend on a number of factors including, but not limited to, particle shape, particle size, particle count, particle cost, particle availability, and the like.

In some embodiments, the neutral-density particles are present in at least 0.1% by volume of the drilling fluid.

In some embodiments, the neutral-density particles may have a diameter of about nanoscale to about 150 microns. In some preferred embodiments, the diameter may be about 100 nm to about 50 µm. In some embodiments, the neutral-density particles will have at least one dimension that is nanoscale (i.e., less than 1 micron).

In some embodiments, the neutral-density particles have a diameter ranging from a lower limit of about 1 nm, 5 nm, 10 nm, 25 nm, 50 nm, 100 nm, 250 nm, 500 nm, 1 µm, 5 µm to an upper limit of about 50 nm, 100 nm, 250 nm, 500 nm, 1 µm, 2 µm, 5 µm, 10 µm, 25 µm , 50 µm, 75 µm, 100 µm, and wherein the diameter may range from any lower limit to any upper limit and encompass any subset there between.

The neutral-density particles are honeycombed or fibrous. In general, it is believed that the specific geometries of the neutral- density particles can affect the settling rate of the weighting agent or any particle present in the suspension. In particular, the honeycombed and fibrous neutral-density particles may act as a "net" to capture the settling weighting agent or dense particle.

In some embodiments, the neutral-density particles may be coated and/or functionalized. This coating and/or functionalization may enhance the particle-to-particle interaction between the neutral-density particles and the dense particles. The coating and/or functionalization may also enhance the hindered settling effects on the dense particles. Suitable coating and functionalization materials include, but are not limited to, nylon, polystyrene, polyethylene, polypropylene, and the like. It may be desirable for the functionalized materials to be a polymer featuring any number of geometric shapes, including a long tail. Without being limited by theory, it is believed that the specific geometrical shape of the functionalized material may further reduce the settling of the particles.

In some embodiments, the neutral-density particles may be coated and/or functionalized to make the neutral-density particles water-wet or oil-wet. The desirability of the coating and/or functionalization may depend on several factors such as, but not limited to, the nature of the fluid, and the desired direction of particle flow. These factors will be apparent to those of ordinary skill in the art.

In general, oftentimes weighting agents found in drilling fluids are dense particles having a specific gravity of at least about 2.5 g/cm³. Suitable examples of weighting agents include, but are not limited to, barite, hematite (Fe₂O₃), calcium carbonate, siderite (FeCO₃), ilmenite (FeO.TiO₂), and the like. The weighting agents may be ground to the desired size by a variety of methods. The weighting agents may be coated or uncoated.

In some embodiments using barite as the weighting agent, the barite has a particle size of about 5 microns to about 75 microns as required by API for drilling grade barite. In some embodiments, barite may have a d₅₀ of about 30 microns to about 55 microns. In some embodiments, barite may be ground to a distribution such that at least 90% (d₉₀) of the cumulative volume of the measured particle diameters is between about 4 to about 20 microns and includes at least 50% of the cumulative volume of the measured particle diameters (d₅₀) in the range of about 1 to about 10 microns. In some embodiments, the barite may have a d₅₀ of about 1 micron to about 20 microns. In some embodiments, the barite may have a d₅₀ of about 1 to about 4 microns.
In some embodiments, the barite may have a d₅₀ of about less than 1 micron. In some embodiments, the barite may have a d₉₀ of about 1 micron to about 10 microns. In some embodiments, the barite may have a d₉₀ of about 8 microns to about 18 microns. In some embodiments, the barite may have a d₉₀ of about 1 micron to about 20 microns.

In some embodiments, the methods of the present invention generally comprise providing a drilling fluid comprising : a base fluid and a weighting agent having a first average settling velocity; and a neutral-density particle; and mixing the drilling fluid with the neutral-density particle thereby reducing the first average settling velocity of the weighting agent to a second average settling velocity. In some embodiments, the weighting agent is ground to a particle size of about 5 microns to about 75 microns.

The settling velocities of particles may be verified using a Dynamic High Angle Sag Test (DHAST™ from Halliburton Energy Services, Inc.) system such as the one described in U.S. 6,584,833. Commercially available systems include M8500 ULTRA HPHT DYNAMIC SAGGING TESTER from Grace Instrument, Houston, TX.

In some embodiments, the present invention provides a fracturing fluid comprising: a base fluid, neutral-density particles, and at least one additive selected from the group consisting of: an acid, a biocide, a breaker, a clay stabilizer, a corrosion inhibitor, a crosslinker, a friction reducer, a gelling agent, an iron control agent, a scale inhibitor, a surfactant, a proppant, and any combination thereof. Such additives are well-known by those of ordinary skill in the art. Suitable examples of some of these are described in U .S. 7,712,534.

In some embodiments, the present invention provides a completion fluid comprising: a base fluid, neutral-density particles, and at least one additive selected from the group consisting of: one or more salts, a gas, a surfactant, a fluid loss control additive, a rheology control additive, and any combination thereof. Such additives are well-known by those of ordinary skill in the art. Suitable examples of some of these are described in U.S. 7, 124,822 and 7,575,055.

In some embodiments, the present invention provides a sand control fluid comprising: a base fluid, neutral-density particles and at least one additive selected from the group consisting of: a proppant, a relative permeability modifier, a consolidating agent, and any combination thereof. Such additives are well-known by those of ordinary skill in the art. Suitable examples of some of these are described in U .S. 7,493,957 and 7,678,742.

In some embodiments, the present invention provides a paint comprising: a pigment and neutral-density particles. Optionally, the paint may further comprise at least one of: a solvent, a filler, an antifreeze additive, a catalyst, a thickener, an adhesion promoter, a UV stabilizer, a de-glossing agent, a biocide, and any combination of these.

In some embodiments, the pigment comprises a pigment selected from the group consisting of: clay, calcium carbonate, mica, silica, talc, titanium dioxide, and any combination thereof.

In some embodiments, the solvent comprises a solvent selected from the group consisting of: an aliphatic solvent, an aromatic solvent, an alcohol, a ketone, a hydrocarbon, an ester, a petroleum distillate, and any combination thereof.

In some embodiments, the filler comprises a filler selected from the group consisting of: diatomaceous earth, talc, lime, barite, clay, and any combination thereof.

## Claims

1. A method comprising:
providing a subterranean treatment fluid comprising: a base fluid and a weighting agent having a first average settling velocity; and a neutral-density particle selected from the group consisting of: polyamides, polystyrenes, polyacrylonitriles, polyvinyl acetates, styrene-butadienes, polymethylpentenes, , butyl rubbers, polycarbonates, buckyballs, nanoclays, exfoliated graphites, and any combination thereof; and
mixing the subterranean treatment fluid with the neutral-density particle thereby reducing the first average settling velocity of the weighting agent to a second average settling velocity, wherein the neutral-density particle is honeycombed, or fibrous.

2. The method according to claim 1, wherein the subterranean treatment fluid is a drilling fluid.

3. The method according to claim 2 further comprising:
at least one additive selected from the group consisting of: an acid, a biocide, a breaker, a clay stabilizer, a corrosion inhibitor, a crosslinker, a friction reducer, a gelling agent, an iron control agent, a scale inhibitor, a surfactant, a proppant, and any combination thereof.

4. The method according to claim 1 or 2, wherein the base fluid is selected from the group consisting of: an oil-based fluid, an aqueous-based fluid, an aqueous-miscible fluid, a water-in-oil emulsion, an oil-in-water emulsion, and any combination thereof.

5. The method according to claim 1 or 2, wherein the weighting agent is selected from the group consisting of: barite, hematite, calcium carbonate, siderite, ilmenite, and any combination thereof.

6. The method according to claim 1 or 2, wherein the weighting agent has a particle size of 5 µm to 75 µm.

7. The method according to claim 1 or 2, wherein the weighting agent has a specific gravity of at least 2.5 g/cm³.

8. The method according to claim 1 or 2, wherein the neutral-density particle has a diameter of 1 nm to 100 µm.

9. The method according to claim 1 or 2, wherein the neutral-density particle has a density ranging from density of the weighting agent to density of the base fluid.

10. The method according to claim 1 or 2, wherein the neutral-density particle has a concentration of 0.1% or greater by volume.

11. A treatment fluid comprising:
a base fluid;
a weighting agent; and
a neutral-density particle, the neutral-density particle is selected from the group consisting of polyamides, polystyrenes, polyacrylonitriles, polyvinyl acetates, styrene-butadienes, polymethylpentenes, butyl rubbers, polycarbonates, buckyballs, nanoclays, exfoliated graphites, and any combination thereof, wherein the neutral-density particle is honeycombed, or fibrous.

## Patentansprüche

1. Verfahren, umfassend:
Bereitstellen eines unterirdischen Behandlungsfluids, umfassend: ein Basisfluid und ein Beschwerungsmittel, das eine erste durchschnittliche Sinkgeschwindigkeit aufweist; und ein Partikel mit neutraler Dichte, das aus der Gruppe ausgewählt ist, die aus Folgendem besteht: Polyamide, Polystyrole, Polyacrylonitrile, Polyvinylacetate, Styrolbutadiene, Polymethylpentene, Butylkautschuke, Polycarbonate, Bucky Balls, Nanotone, Blähgraphite und jede Kombination daraus; und
Mischen des unterirdischen Behandlungsfluids mit dem Partikel mit neutraler Dichte, wodurch die erste durchschnittliche Sinkgeschwindigkeit des Beschwerungsmittels auf eine zweite durchschnittliche Sinkgeschwindigkeit verringert wird, wobei das Partikel mit neutraler Dichte wabenartig oder faserig ist.

2. Verfahren nach Anspruch 1, wobei das unterirdische Behandlungsfluid ein Bohrfluid ist.

3. Verfahren nach Anspruch 2, ferner umfassend:
mindestens ein Additiv, das aus der Gruppe ausgewählt ist, die aus Folgendem besteht: eine Säure, ein Biozid, ein Brecher, ein Tonstabilisator, ein Korrosionshemmer, ein Vernetzer, ein Reibungsminderer, ein Geliermittel, ein Eisenkontrollmittel, ein Ablagerungshemmer, eine oberflächenaktive Substanz, ein Stützmittel und jede Kombination daraus.

4. Verfahren nach Anspruch 1 oder 2, wobei das Basisfluid aus der Gruppe ausgewählt ist, die aus Folgendem besteht: ein ölbasiertes Fluid, ein wasserbasiertes Fluid, ein wassermischbares Fluid, eine Wasser-in-Öl-Emulsion, eine Öl-in-Wasser-Emulsion und jede Kombination daraus.

5. Verfahren nach Anspruch 1 oder 2, wobei das Beschwerungsmittel aus der Gruppe ausgewählt ist, die aus Folgendem besteht: Baryt, Hämatit, Calciumcarbonat, Siderit, Ilmenit und jede Kombination daraus.

6. Verfahren nach Anspruch 1 oder 2, wobei das Beschwerungsmittel eine Partikelgröße von 5 µm bis 75 µm aufweist.

7. Verfahren nach Anspruch 1 oder 2, wobei das Beschwerungsmittel ein spezifisches Gewicht von mindestens 2,5 g/cm³ aufweist.

8. Verfahren nach Anspruch 1 oder 2, wobei das Partikel mit neutraler Dichte einen Durchmesser von 1 nm bis 100 µm aufweist.

9. Verfahren nach Anspruch 1 oder 2, wobei das Partikel mit neutraler Dichte eine Dichte im Bereich von der Dichte des Beschwerungsmittels bis zur Dichte des Basisfluids aufweist.

10. Verfahren nach Anspruch 1 oder 2, wobei das Partikel mit neutraler Dichte eine Konzentration von 0,1 Volumen-% oder größer aufweist.

11. Behandlungsfluid, umfassend:
ein Basisfluid;
ein Beschwerungsmittel; und
ein Partikel mit neutraler Dichte, wobei das Partikel mit neutraler Dichte aus der Gruppe ausgewählt ist, die aus Polyamiden, Polystyrolen, Polyacrylonitrilen, Polyvinylacetaten, Styrolbutadienen, Polymethylpentenen, Butylkautschuken, Polycarbonaten, Bucky Balls, Nanotonen, Blähgraphiten und jeder Kombination daraus besteht, wobei das Partikel mit neutraler Dichte wabenartig oder faserig ist.

## Revendications

1. Procédé comprenant :
la fourniture d'un fluide de traitement souterrain comprenant : un fluide de base et un agent alourdissant ayant une première vitesse de sédimentation moyenne ; et une particule à densité neutre choisie dans le groupe constitué par : les polyamides, les polystyrènes, les polyacronitriles, les acétates de polyvinyle, les styrènes-butadiènes, les polyméthylpentènes, les caoutchoucs butyle, les polycarbonates, les fullerènes, les nanoargiles, les graphites exfoliés et toute combinaison de ceux-ci ; et
le mélange du fluide de traitement souterrain avec la particule à densité neutre réduisant ainsi la première vitesse de sédimentation moyenne de l'agent alourdissant en une seconde vitesse de sédimentation moyenne, dans lequel la particule à densité neutre est en nid d'abeilles ou fibreuse.

2. Procédé selon la revendication 1, dans lequel le fluide de traitement souterrain est un fluide de forage.

3. Procédé selon la revendication 2, comprenant en outre :
au moins un additif choisi dans le groupe constitué par :
un acide, un biocide, un agent de rupture, un stabilisateur d'argile, un inhibiteur de corrosion, un agent de réticulation,
un réducteur de frottement, un agent gélifiant, un agent de lutte contre le fer, un inhibiteur de tartre, un tensioactif,
un agent de soutènement et toute combinaison de ceux-ci.

4. Procédé selon la revendication 1 ou 2, dans lequel le fluide de base est choisi dans le groupe constitué par : un fluide à base d'huile, un fluide à base aqueuse, un fluide miscible à l'eau, une émulsion eau dans huile, une émulsion huile dans eau et toute combinaison de ceux-ci.

5. Procédé selon la revendication 1 ou 2, dans lequel l'agent alourdissant est choisi dans le groupe constitué par :
la baryte, l'hématite, le carbonate de calcium, la sidérite, l'ilménite et toute combinaison de ceux-ci.

6. Procédé selon la revendication 1 ou 2, dans lequel l'agent alourdissant a une taille de particule de 5 µm à 75 µm.

7. Procédé selon la revendication 1 ou 2, dans lequel l'agent alourdissant a une densité d'au moins 2,5 g/cm³.

8. Procédé selon la revendication 1 ou 2, dans lequel la particule à densité neutre a un diamètre de 1 nm à 100 µm.

9. Procédé selon la revendication 1 ou 2, dans lequel la particule à densité neutre a une densité allant de la densité de l'agent alourdissant à la densité du fluide de base.

10. Procédé selon la revendication 1 ou 2, dans lequel la particule à densité neutre a une concentration de 0,1 % ou plus en volume.

11. Fluide de traitement comprenant :
un fluide de base ;
un agent alourdissant ; et
une particule à densité neutre, la particule à densité neutre est choisie dans le groupe constitué par les polyamides, les polystyrènes, les polyacronitriles, les acétates de polyvinyle, les styrènes-butadiènes, les polyméthylpentènes, les caoutchoucs butyle, les polycarbonates, les fullerènes, les nanoargiles, les graphites exfoliés et toute combinaison de ceux-ci, dans lequel la particule à densité neutre est en nid d'abeilles ou fibreuse.
